# FASCICULE DE BREVET EUROPEEN

(11) **EP 0 652 122 B1**
(45) Date de publication et mention de la délivrance du brevet: **11.12.1996**
(21) Numéro de dépôt: 94402455.3
(22) Date de dépôt: 28.10.1994
(51) Int. Cl.: B60G 17/056

(54) **Dispositif de suspension hydropneumatique de véhicule automobile**
Hydropneumatische Federung für ein Kraftfahrzeug
Hydropneumatic suspension for a motor vehicle

(30) Priorité: 09.11.1993 FR 9313380
(43) Date de publication de la demande: 10.05.1995
(73) Titulaire: AUTOMOBILES PEUGEOT, 75116 Paris (FR); AUTOMOBILES CITROEN, 92200 Neuilly-sur-Seine (FR)
(72) Inventeur: Richard, Denis, F-94600 Choisy le Roi (FR)
(74) Mandataire: Berger, Helmut

(56) Documents cités:
- EP-A- 0 487 928
- EP-A- 0 513 528
- FR-A- 2 131 546
- FR-A- 2 585 296

## Description

L'invention concerne un dispositif de suspension hydropneumatique de véhicule automobile, du type comprenant au moins un vérin de suspension pour une roue du véhicule, alimenté en liquide, une vanne actionnée par une commande mécanique de correction de hauteur de la caisse du véhicule, de façon à isoler le vérin ou à le relier alternativement à une source de pression ou à un réservoir de circuit et un clapet anti-affaissement placé entre la vanne et le vérin de suspension et susceptible d'être ouvert par des moyens sensibles à la pression du liquide en amont de la vanne quand cette pression dépasse un seuil prédéterminé.

Une suspension hydropneumatique de ce type est connue par le brevet français n° 2 585 296.

Cette suspension connue utilise un circuit dit à centre fermé où le liquide est maintenu en permanence sous pression au moyen d'un régulateur de pression et d'une réserve de pression sous forme d'un accumulateur principal. Dans ce circuit, les différentes fonctions sont accomplies par des parties qui sont réalisées sous forme de pièces séparées, ce qui nécessite un grand nombre de canalisations et de raccordements. De plus, quand l'assiette du véhicule est normale, le clapet anti-affaissement est en permanence ouvert et le circuit ainsi sous pression, sauf à l'arrêt prolongé du véhicule.

La présente invention a pour but de proposer une suspension à correction d'assiette et moyen d'anti-affaissement, avec circuit dit à flot continu ne nécessitant pas de moyens de maintien de pression permanente.

Pour atteindre ce but, le dispositif de suspension selon l'invention est caractérisé en ce qu'il comprend une vanne qui est agencée de manière qu'en position neutre lorsque l'assiette du véhicule est normale, elle relie la source de pression au réservoir assurant ainsi un flot à très basse pression, et en ce qu'un limiteur de pression est placé en amont de la vanne pour assurer, quand celle-ci est en position d'échappement où elle obture l'arrivée de liquide, le flot continu de retour au réservoir et le maintien d'une pression supérieure au seuil précité sur les moyens sensibles ouvrant le clapet anti-affaissement.

Selon une caractéristique avantageuse de l'invention, une restriction d'écoulement est prévue sur le circuit de retour au réservoir relié au vérin du liquide, par la vanne en position échappement.

Selon encore une autre caractéristique avantageuse de l'invention, le clapet anti-affaissement et le limiteur de pression sont intégrés dans le corps de la vanne.

L'invention sera mieux comprise et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels.

La figure 1 est une vue schématique d'un dispositif de suspension selon la présente invention.

Les figures 2 à 4 sont des vues en coupe d'un corps de vanne selon l'invention dans lesquelles sont intégrés le clapet anti-affaissement et le limiteur de pression et qui montrent le dispositif dans ses positions respectivement neutre, d'admission et d'échappement.

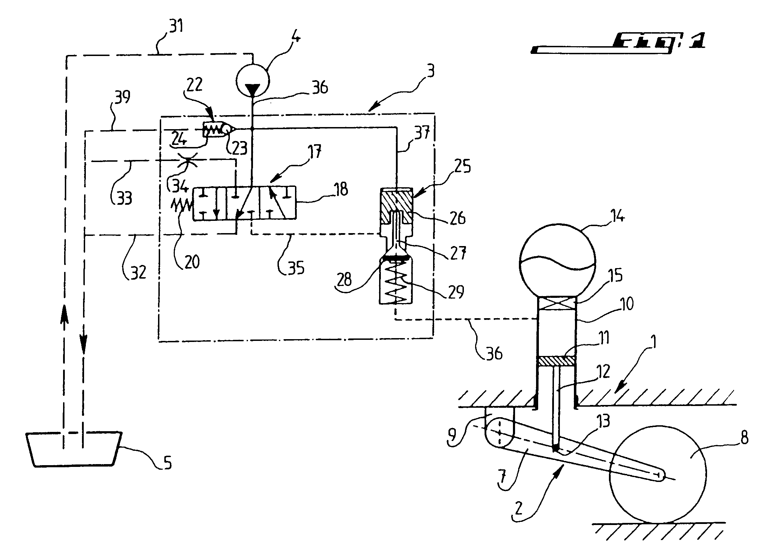

Sur la figure 1 les numéros de référence 1, 2, 3, 4 et 5 désignent respectivement la caisse d'un véhicule automobile, la suspension d'une roue du véhicule, un correcteur de hauteur associé à la suspension, la pompe et le réservoir du circuit d'alimentation en liquide de la suspension 2. En pratique, deux roues d'un même essieu du véhicule sont respectivement associées à deux vérins alimentés en parallèle dans le circuit.

Plus en détail, on constate que la suspension 2 comprend un levier 7 qui supporte à une extrémité la roue 8 et est articulé par son autre extrémité à un palier 9 qui est solidaire de la caisse 1. Sur cette dernière est fixé un cylindre de suspension 10 dans lequel coulisse un piston 11 dont la tige 12 est articulée en 13 sur le bras 7, c'est-à-dire un endroit situé entre les deux extrémités du levier. Sur le cylindre 10 est montée, de façon étanche, la sphère de suspension 14, par l'intermédiaire de son amortisseur 15.

Le correcteur de hauteur 3 comprend une vanne de commande 17 dont le tiroir indiqué schématiquement en 18 est actionné par une commande mécanique comportant des moyens élastiques 20 et relié à des organes de suspension du véhicule, de façon connue en soi. Le correcteur de hauteur 3 comporte en outre un ensemble limiteur de pression 22 pourvu d'une bille 23 et d'un ressort taré 24 et un dispositif clapet anti-affaissement 25. Ce dernier comprend essentiellement un poussoir 26, un clapet conique 27 pourvu d'un joint d'étanchéité 28 et un ressort de rappel 29 du clapet 27.

Concernant le circuit hydraulique, on constate que la pompe 4 aspire du liquide hydraulique dans le réservoir 5, à travers un conduit 31. Le numéro 36 désigne le conduit de refoulement de la pompe. Le circuit de retour du liquide au réservoir comprend un conduit normal 32 et un conduit 33 qui est pourvu d'un gicleur 34 . Le dispositif clapet anti-affaissement reçoit du liquide par un conduit 35 et assure l'alimentation en liquide du vérin de suspension 10 au moyen d'un conduit 36. D'autre part, le clapet anti-affaissement reçoit du liquide directement par la pompe 4 à travers un conduit 37 pour actionner le poussoir 26. Le conduit dans lequel est placé le limiteur de pression 22 est indiqué en 39 et relie la pompe 4 ou réservoir 5.

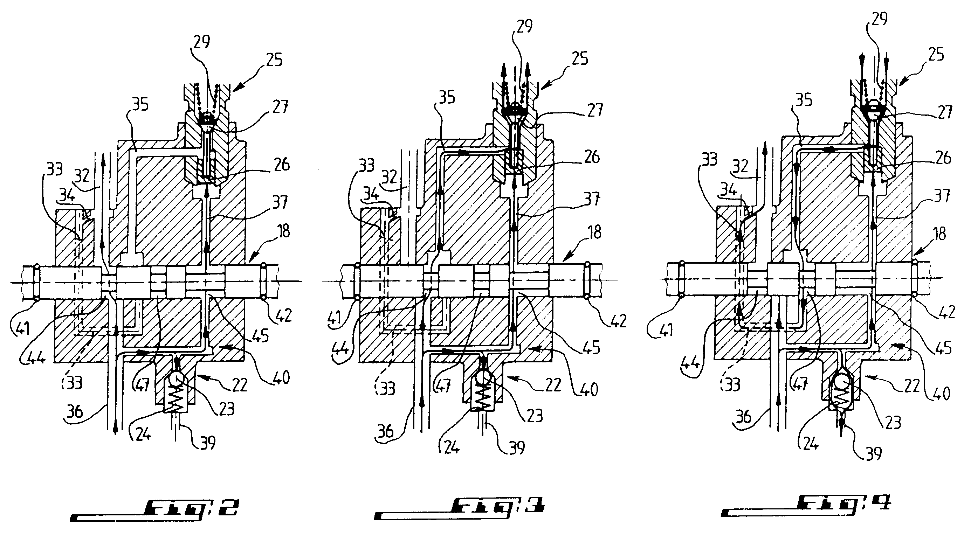

Une particularité de l'invention réside dans le fait que le correcteur de hauteur 3 est réalisé sous forme d'un seul corps auquel sont incorporés la vanne 12, le clapet anti-affaissement 25 et le limiteur de pression 23, comme cela est indiqué schématiquement à la figure 1 à l'aide de la ligne en traits mixtes. Les figures 2 à 4 montrent la structure de ce corps dans lequel les conduits susmentionnés constituent des canaux internes portant les mêmes numéros de référence que ces conduits.

Il est encore à noter que le tiroir 18 qui s'étend à travers le bloc 40 formant la chemise de la vanne porte, de part et d'autre du bloc, des joncs 41, 42 qui constituent des éléments de butée de la course du tiroir dans ses deux directions, comme cela ressort clairement des figures. Comme l'indiquent également les figures, le tiroir comporte un certain nombre d'évidements annulaires qui permettent d'établir les différentes voies d'écoulement de fluide à travers le corps du correcteur de hauteur, dont les fonctions et les emplacements ressortiront de la description du fonctionnement du dispositif de suspension selon l'invention, qui suit.

La figure 2 montre le dispositif de suspension dans la position neutre. La caisse du véhicule est en état d'assiette normale et le tiroir 18 occupe une position médiane par rapport à la chemise 40 du correcteur de hauteur. Le débit de la pompe traverse la chemise, comme cela est indiqué par la ligne fléchée. En effet, les conduits de refoulement 36 de la pompe 4 et de retour 32 au réservoir 5 communiquent à travers un évidement annulaire 44 du tiroir. Ainsi le débit rejoint le réservoir pratiquement sans pression, à l'exception de quelques bars dûs à la perte de charge dans le circuit. De ce fait la pression du liquide qui parvient à travers un deuxième évidement annulaire 45 du tiroir et le canal interne 37 au clapet anti-affaissement 25 et agit sur le poussoir 26, est insuffisante pour actionner ce dernier et pour pousser la bille 23 du limiteur de pression, à l'encontre du ressort 34.

La figure 3 montre le dispositif de suspension dans sa position d'admission. Le véhicule a été chargé et sa caisse 1 s'est affaissée. La commande mécanique entraîne le tiroir 18, après un temps de temporisation, jusqu'à ce que sa butée constituée par le jonc 41 vienne en appui sur la face de la chemise 40. Le conduit de retour 32 est obstrué par le tiroir. Ce dernier met en communication, par ses évidements annulaires 44 et 45, le conduit de refoulement 36 de la pompe avec les conduits internes 35 et 37 du clapet anti-affaissement 25. De ce fait, la pompe délivre du liquide dont la pression déplace le poussoir 26 du clapet 25. Ce poussoir soulève le clapet 27 de ce dernier. Toutefois cette opération n'est pas indispensable car du liquide sous pression va également arriver directement en dessous du clapet 27. Par conséquent du liquide sous pression peut parvenir au vérin de suspension 10 et relever la caisse du véhicule. En se relevant, la caisse va agir sur le tiroir 18 par l'intermédiaire du mécanisme de commande mécanique et retrouver la position neutre de la figure 2.

La figure 4 montre le dispositif de suspension dans sa position d'échappement. Le véhicule est déchargé et sa caisse 1 se relève. La commande mécanique entraîne le tiroir 18, après un temps de temporisation, jusqu'à ce que sa butée 42 vienne en appui sur la face de la chemise 40, du correcteur de hauteur. La communication de la pompe et du réservoir est obturée par le tiroir et le fluide sous pression en provenance de la pompe peut déplacer le poussoir 26 qui soulève le clapet 27. Cet actionnement du clapet établit la communication entre le vérin de suspension 10 et le réservoir 5 à travers le conduit interne 35, un évidement annulaire 47 du tiroir 18 et le canal interne 33 avec le gicleur 34. Le liquide qui vient du cylindre de suspension est freiné par le gicleur de façon à éviter que la caisse 1 ne s'affaisse pas trop rapidement. En s'affaissant la caisse va agir sur le tiroir par l'intermédiaire du mécanisme de commande jusqu'à ce que la caisse retrouve la position neutre de la figure 2. Pendant ce processus, le débit de la pompe s'évacuera par l'intermédiaire du limiteur de pression 22, comme cela est illustré par la ligne fléchée. En effet, la bille 23 s'effacera pour permettre au liquide de retourner au réservoir tout en maintenant dans le conduit 37, grâce au ressort taré 24 une pression supérieure à la pression de suspension, de façon à laisser ouvert le clapet anti-affaissement.

Il ressort de la description de l'invention qui vient d'être faite, que le dispositif de suspension selon l'invention présente une structure simple qui ne nécessite pas de régulateur de pression, ni de réserve de pression telle qu'un accumulateur principal. Le correcteur de hauteur, le clapet anti-affaissement et le limiteur de pression ne font qu'un seul organe et de ce fait, les canalisations sont réduites ainsi que le nombre de raccordements.

## Revendications

1. Dispositif de suspension hydropneumatique de véhicule automobile, du type comprenant au moins un vérin de suspension (10) pour une roue (8) du véhicule, une pompe (4) d'alimentation en liquide du vérin, à partir d'un réservoir (5) dudit liquide, une vanne (17) actionnée par une commande mécanique de correction de hauteur de la caisse du véhicule, de façon à isoler le vérin (10) ou à le relier alternativement à ladite pompe (4) ou audit réservoir (5), et un clapet anti-affaissement (25) placé entre la vanne (17) et le vérin de suspension (10) et susceptible d'être ouvert par des moyens sensibles à la pression du liquide en amont de la vanne, quand cette pression dépasse un seuil prédéterminé, caractérisé en ce que la vanne (17) est agencée de manière qu'en position neutre lorsque la caisse du véhicule est à l'état normal, elle établit entre la pompe (4) et le réservoir (5) une voie d'écoulement de fluide (44) à basse pression, et en ce qu'un limiteur de pression (22) est placé en amont de la vanne pour assurer, quand celle-ci est en position d'échappement du vérin de suspension, où elle obture l'arrivée de liquide, le flot continu de retour au réservoir et le maintien d'une pression supérieure au seuil précité sur les moyens d'ouverture (26, 29) du clapet anti-affaissement (25).

2. Dispositif de suspension selon la revendication 1, caractérisé en ce qu'une restriction d'écoulement (34) est prévue sur le circuit de retour (33) au réservoir (5) du liquide en provenance du vérin de suspension (10) à travers la vanne (17) se trouvant en position d'échappement.

3. Dispositif de suspension selon l'une des revendications 1 ou 2, caractérisé en ce que le clapet anti-affaissement (25) et le limiteur de pression (22) sont intégrés au corps (40) de la vanne (17).

## Claims

1. Hydropneumatic suspension device for an automotive vehicle, of the type comprising at least one suspension jack (10) for one wheel (8) of the vehicle, a pump (4) for feeding the jack with liquid from a tank (5) for the said liquid, a valve (17) actuated by a mechanical control for the correction of the heigth of the vehicle body, so as to isolate the jack (10) or to connect it alternately to the said pump (4) or to the said tank (5) and an anti-sagging valve (25) placed between the valve (17) and the suspension jack (10) and adapted to be opened by means sensitive to the pressure of the liquid upstream of the valve (17) when this pressure exceeds a predertermined threshold, characterized in that the valve (17) is arranged so that in the neutral position when the body of the vehicle is in the normal state, it provides between the pump (4) and the tank (5) a low pressure fluid flow way (44) and in that a pressure limiter (22) is placed upstream of the valve (17) to ensure, when the latter is in the position of exhausting the suspension jack wherein it shuts off the liquid feed, the continuous return flow to the tank and the keeping of a pressure higher than the aforesaid treshold upon the opening means (26, 29) of the anti-sagging valve (25).

2. Suspension device according to claim 1, characterized in that a flow restriction (34) is provided on the return circuit (33) to the tank (5) of the liquid coming from the suspension jack (10) through the valve (17) being in the eduction position.

3. Suspension device according to one of claims 1 or 2, characterized in that the anti-sagging valve (25) and the pressure limiter (22) are integrated into the body (40) of the valve (17).

## Patentansprüche

1. Hydropneumatische Aufhängungsvorrichtung für ein Kraftfahrzeug, derjenigen Gattung, mit wenigstens einem Aufhängungskraftzylinder (10) für ein Rad (8) des Fahrzeuges, einer Pumpe (4) zur Speisung des Kraftzylinders mit Flüssigkeit aus einem Behälter (5) für die besagte Flüssigkeit, einem durch eine mechanische Steuervorrichtung für die Höhenlagenberichtigung des Fahrzeugkastens betätigtes Ventil (17), um den Kraftzylinder (10) abzusondern oder ihn wechselweise mit der besagten Pumpe (4) oder mit dem besagten Behälter (5) zu verbinden, und einem zwischen dem Ventil (17) und dem Aufhängungskraftzylinder (10) angeordneten senkungshemmenden Ventil (25), das durch gegen den Druck der Flüssigkeit stromaufwärts des Ventils (17) empfindliche Mittel geöffnet werden kann, wenn dieser Druck eine vorbestimmte Schwelle überschreitet, dadurch gekennzeichnet, dass das Ventil (17) derart angeordnet ist, dass in der neutralen Stellung, wenn der Kasten des Fahrzeuges im normalen Zustand ist, einen Niederdruckfluidströmungsweg (44) zwischen der Pumpe (4) und dem Behälter (5) herstellt und dass ein Druckbegrenzer (22) stromaufwärts des Ventils (17) angeordnet ist, um, wenn es in der Auslaßstellung für den Aufhängungskraftzylinder, in welcher es die Flüssigkeitszufuhr absperrt, ist, den kontinuierlichen Rückfluss zum Behälter und das Aufrechterhalten eines höheren Druckes, als die vorgenannte Schwelle, auf die Öffnungsmittel (26, 29) des senkungshemmenden Ventils (25) zu gewährleisten.

2. Aufhängungsvorrichtung nach Anspruch 1, dadurch gekennzeichnet, dass eine Strömungsdrosselung (34) in dem Rückflusskreislauf (33) zum Behälter (5) der von dem Aufhängungskraftzylinder (10) durch das sich in der Auslaßstellung befindende Ventil (17) hindurch kommenden Flüssigkeit vorgesehen ist.

3. Aufhängungsvorrichtung gemäss einem der Ansprüche 1 oder 2, dadurch gekennzeichnet, dass das senkungshemmende Ventil (25) und der Druckbegrenzer (22) in dem Körper (40) des Ventils (17) eingegliedert sind.
